# FASCICULE DE BREVET EUROPEEN

(11) **EP 2 868 583 B1**
(45) Date de publication et mention de la délivrance du brevet: **05.12.2018**
(21) Numéro de dépôt: 14003219.4
(22) Date de dépôt: 17.09.2014
(51) Int. Cl.: B64D 37/06, B64D 37/04

(54) **Dispositif de fixation d'un réservoir souple dans un compartiment**
Vorrichtung zum Befestigen eines flexiblen Behälters in einem Fach
Device for attaching a flexible tank inside a compartment

(30) Priorité: 11.10.2013 FR 1302368
(43) Date de publication de la demande: 06.05.2015
(73) Titulaire: Airbus Helicopters, 13725 Marignane Cedex (FR)
(72) Inventeur: Bornes, Sylvain, 13111 Coudoux (FR)
(74) Mandataire: GPI & Associés

(56) Documents cités:
- BE-A- 489 587
- FR-A- 962 459
- FR-A- 1 219 718
- FR-A1- 2 763 313
- US-A- 2 519 393
- US-A1- 2012 272 497
- US-A1- 2013 214 095

## Description

La présente invention se situe dans le domaine des moyens de stockage de fluides, et en particulier de leur installation.

La présente invention concerne un dispositif de fixation d'un réservoir souple dans un compartiment, ce dispositif de fixation étant plus particulièrement destiné à un réservoir souple de carburant d'un aéronef à voilure tournante.

La présente invention concerne également un système de stockage de carburant utilisant un tel dispositif de fixation ainsi qu'un aéronef à voilure tournante utilisant un tel système de stockage de carburant.

Les aéronefs, et notamment les aéronefs à voilures tournantes, disposent d'au moins un réservoir de carburant et généralement de plusieurs réservoirs de carburant. Chaque réservoir est généralement souple et logé respectivement dans un compartiment. Chaque compartiment peut être situé dans une structure inférieure de l'aéronef, par exemple en dessous du plancher de la cabine de cet aéronef ou bien dans des structures verticales de l'aéronef, telles que des cloisons transversales ou latérales.

Chaque réservoir souple, généralement réalisé en matériau à base de caoutchouc, permet tout d'abord son montage dans un compartiment généralement plus grand que l'ouverture qu'il comporte. De plus, la flexibilité de ce réservoir souple est favorable à la tenue de ce réservoir en cas de chocs et/ou de déplacements du réservoir dans le compartiment, et plus particulièrement en cas de crash de l'aéronef.

Généralement, chaque réservoir est relié au compartiment par un système de laçage. Ce système de laçage est constitué par un cordon, par exemple en nylon, reliant des anneaux présents sur le réservoir et des anneaux présents sur le compartiment.

Ce système de laçage permet d'éliminer les plis de peau pouvant apparaître pendant la mise en place du réservoir dans le compartiment. Ce système de laçage évite également tout écrasement du réservoir sur lui-même susceptible d'endommager les composants internes à ce réservoir tels qu'une pompe à carburant, une canne de jauge de niveau carburant ou encore une crépine. Ce système de laçage permet donc de garantir la forme du réservoir dès son montage et pendant la durée de vie de l'aéronef.

En outre, lors d'un crash de l'aéronef, au moins une partie des anneaux situés sur le compartiment et/ou sur le réservoir peut s'ouvrir ou bien se désolidariser du compartiment et/ou du réservoir, alors que le lacet reste intègre. De fait, le réservoir n'est plus totalement relié au compartiment permettant au réservoir de se déformer indépendamment du compartiment, évitant ainsi toute détérioration, voire déchirure, du réservoir.

Par contre, ce système de laçage est particulièrement lourd à mettre en place, ce laçage étant réalisé manuellement par un opérateur qui doit se situer à l'intérieur de l'aéronef.

En effet, l'opérateur doit, après insertion du réservoir dans le compartiment, mettre en place manuellement ce cordon reliant le réservoir et le compartiment. Pour cela, il doit tout d'abord couper une longueur adéquate d'un cordon et en brûler les extrémités afin d'éviter le phénomène d'effilochage, ce cordon étant généralement en nylon.

Ensuite, l'opérateur doit passer le cordon dans chaque anneau solidaire du réservoir et dans chaque anneau solidaire du compartiment, ces anneaux étant fermés. Enfin, l'opérateur doit tendre le cordon manuellement et faire un noeud prédéfini à chaque extrémité du cordon le fixant à un anneau.

Par ailleurs, la mise en place de ce cordon n'est généralement possible qu'en partie supérieure du réservoir, la partie inférieure étant trop difficilement accessible pour réaliser ces opérations manuelles une fois le réservoir mis en place dans le compartiment. De fait, l'ajustage du réservoir dans le compartiment est limité, la tension de la peau du réservoir ne se faisant que dans sa partie supérieure.

De plus, une mise en place correcte, c'est-à-dire sans pli, du réservoir au fond du compartiment est importante, voire indispensable, pour permettre de relier de façon fiable deux réservoirs par l'intermédiaire d'une conduite spécifique. L'opérateur doit alors s'assurer manuellement de cette mise en place correcte.

En outre, une absence de plis sur la peau du réservoir au niveau du fond du compartiment ainsi que sur chaque autre face du réservoir réduit les risques de dégradation de cette peau du réservoir dans le temps.

L'efficacité de cette mise en forme du réservoir peut donc être variable, la mise en tension du cordon maintenant le réservoir dans le compartiment étant effectuée manuellement par l'opérateur. De fait, le réservoir et le compartiment comporte de nombreux anneaux afin de compenser le risque d'une tension faible du cordon et d'obtenir tout de même une mise en forme correcte du réservoir dans le compartiment.

De même, lors d'opérations de maintenance, le démontage du réservoir nécessite d'enlever ce cordon avant d'extraire le réservoir souple de son compartiment. Puis, la même opération de mise en place du cordon précédemment évoquée doit être répétée une fois le réservoir souple de nouveau installé dans son compartiment.

De fait, cette opération de laçage est fastidieuse et pénible pour l'opérateur, mais indispensable et nécessite un temps de montage et démontage important.

Par ailleurs, un réservoir souple peut être suspendu dans son logement par l'intermédiaire de tringles rigides comme décrit dans le document US2013/0214095. Ces tringles s'appuient sur des cloisons de ce logement et sont glissées dans des manchons solidaires de la face supérieure du réservoir. Un réservoir souple peut également être suspendu dans son logement par l'intermédiaire d'attaches à absorption d'énergie comme décrit dans le document FR2763313 ou bien par des câbles comme décrit dans le document FR1219718.

En outre, le document FR1219718 décrit un dispositif de fixation d'un réservoir pour liquide comportant les caractéristiques du préambule de la revendication 1.

On connait également le document US2012/0272497 qui décrit un système facilitant le montage et le démontage d'un réservoir souple. Des rouleaux sont positionnés à l'intérieur du logement de ce réservoir et à proximité de son ouverture permettant le montage et le démontage de ce réservoir. Lors de ce montage et ce démontage, le réservoir roule sur les rouleaux, facilitant ainsi son insertion dans son logement et son extraction de ce logement. De même, la présence de ces rouleaux évite également de dégrader le réservoir lors de cette insertion et cette extraction.

Enfin, le document US2010/0163680 décrit un réservoir souple contenant un filet en matière thermoplastique. Ce filet permet, lorsque que le réservoir se vide et s'affaisse progressivement sur lui-même, de maintenir des passages dans le réservoir pour la circulation du carburant. Par suite, le réservoir peut être vidé entièrement du carburant qu'il contient.

En outre, les documents BE489587, FR962459 et US2519393 font partie de l'arrière plan technologique.

La présente invention a alors pour objet de proposer un dispositif de fixation d'un réservoir souple dans un compartiment permettant de s'affranchir des limitations mentionnées ci-dessus. Ce dispositif de fixation permet notamment de simplifier le montage et le démontage du système de laçage d'un réservoir souple, réduisant le temps nécessaire à ces opérations ainsi que leur pénibilité pour un opérateur.

Ce dispositif de fixation permet également d'améliorer la mise en forme du réservoir souple, d'une part en augmentant le nombre d'arêtes du réservoir susceptibles de disposer d'un système de laçage et d'autre part en facilitant la mise en tension de ce système de laçage.

Enfin, ce dispositif de fixation permet de conserver les propriétés de tenue aux chocs et aux crashs du réservoir souple et est sans impact majeur sur la masse de ce dispositif de fixation et du réservoir souple.

Selon l'invention, un dispositif de fixation d'un réservoir souple dans un compartiment comporte :
- une pluralité de premiers éléments d'accrochage aptes à être solidaires du réservoir souple,
- une pluralité de seconds éléments d'accrochage aptes à être solidaires du compartiment,
- au moins un câble, chaque câble passant dans au moins une partie des premiers éléments d'accrochage et au moins une partie des seconds éléments d'accrochage pour assurer la mise en forme et la fixation du réservoir dans le compartiment,
- au moins un moyen de serrage de chaque câble,
chaque moyen de serrage comportant une molette rotative, un axe d'enroulement et un système de verrouillage de ladite molette rotative, ladite molette rotative permettant d'enrouler ledit câble autour dudit axe d'enroulement, ledit système de verrouillage évitant le déroulement intempestif dudit câble.

Ce dispositif de fixation est destiné à fixer chaque réservoir souple dans un compartiment d'un aéronef, et plus particulièrement d'un aéronef à voilure tournante. Ce dispositif de fixation permet, comme les systèmes de laçage utilisés actuellement sur les aéronefs à voilures tournantes, de relier par l'intermédiaire d'au moins un câble des premiers éléments d'accrochage solidaires d'un réservoir souple et des seconds éléments d'accrochage solidaires d'un compartiment afin de fixer le réservoir souple dans le compartiment. De préférence, le câble passe alternativement par un premier élément d'accrochage solidaire du réservoir souple et un second élément d'accrochage solidaire du compartiment.

En outre, chaque câble est relié à un moyen de serrage afin de faciliter le serrage de chaque câble lors de la mise en place du réservoir souple dans le compartiment. Ce moyen de serrage permet ainsi d'assurer le serrage et la mise en tension du câble qui garantit notamment la mise en forme du réservoir souple ainsi que sa mise en place correcte dans le compartiment.

Ce dispositif de fixation peut comporter un seul câble ou bien plusieurs câbles, chaque câble étant de préférence relié à un moyen de serrage spécifique.

L'utilisation d'un seul câble permet d'avoir un seul moyen de serrage et, par suite, une seule opération de serrage du câble pour la mise en forme du réservoir souple dans le compartiment. Ce câble peut être positionné sur une seule face du réservoir souple assurant ainsi la mise en tension de cette seule face du réservoir. Ce câble peut également être positionné sur plusieurs faces du réservoir souple assurant ainsi la mise en tension simultanée de ces faces du réservoir. Ce dispositif de fixation comportant un seul câble permet donc une mise en place rapide du réservoir souple dans le compartiment.

Par contre, un dispositif de fixation selon l'invention comportant plusieurs câbles et plusieurs moyens de serrage est particulièrement adapté au réservoir souple dont la mise en place doit être effectuée en plusieurs étapes distinctes, par exemple lorsque plusieurs réservoirs souples doivent être reliés entre eux. Un tel dispositif de fixation selon l'invention comportant plusieurs câbles et plusieurs moyens de serrage permet avantageusement d'effectuer la mise en tension de plusieurs faces de ce réservoir souple de façon séquentielle.

Par exemple, le réservoir souple est positionné dans son compartiment, puis un premier câble positionné sur la face inférieure de ce réservoir souple est mis en tension par l'intermédiaire d'un premier moyen de serrage. Cette première opération permet de supprimer les plis sur cette face inférieure et de relier ensuite de façon fiable au moins deux réservoirs souples par l'intermédiaire d'une conduite spécifique. Ensuite, un second câble positionné sur la face supérieure de ce réservoir souple est mis en tension par l'intermédiaire d'un second moyen de serrage afin de terminer la mise en forme de ce réservoir souple dans le compartiment.

Un tel dispositif de fixation selon l'invention comportant deux câbles distincts est ainsi particulièrement adapté aux réservoirs souples de forme sensiblement parallélépipédique. Les deux câbles sont de préférence positionnés sur deux faces opposées de ce réservoir souple.

De plus, les deux moyens de serrage peuvent être positionnés dans une zone facilement accessible du réservoir souple et sur une même face de ce réservoir.

En outre, un tel dispositif de fixation permet avantageusement d'effectuer la mise en tension de plusieurs faces de ce réservoir souple indépendamment les unes des autres. De fait, ce dispositif de fixation permet de mettre en place et en forme des réservoirs souples de forme complexe, utilisant avantageusement tous les volumes disponibles de l'aéronef. Les câbles du dispositif de fixation selon l'invention peuvent alors être positionnés sur plusieurs faces de ce réservoir souple de forme complexe pour permettre sa mise en forme dans le compartiment.

Avantageusement, chaque câble de ce dispositif de fixation ainsi que chaque moyen de serrage sont préalablement assemblés sur le réservoir souple ou bien sur le compartiment de façon à faciliter la mise en forme du réservoir souple ainsi que sa mise en place correcte dans le compartiment.

Selon un premier mode de réalisation de l'invention qui est le mode de réalisation préféré, chaque câble de ce dispositif de fixation ainsi que chaque moyen de serrage sont préalablement assemblés sur le réservoir souple. Le câble passe dans ce but dans des premiers éléments d'accrochage solidaires du réservoir souple. Les premiers éléments d'accrochage sont de préférence fixés sur les arêtes du réservoir souple afin d'assurer une mise en forme optimum du réservoir souple.

Chaque premier élément d'accrochage peut être un moyen d'accrochage fermé afin d'éviter que le câble puisse s'échapper de ce premier élément d'accrochage. Les premiers éléments d'accrochage peuvent être par exemple des anneaux ou bien des boucles fermées solidaires du réservoir souple. Les premiers éléments d'accrochage peuvent également être des gaines ou bien des tubes solidaires du réservoir souple.

L'utilisation de ces gaines ou bien de ces tubes permet de répartir la tension du câble linéairement sur le réservoir souple contrairement à un anneau ou une boucle fermée qui applique cette tension ponctuellement. De plus, l'utilisation de ces gaines ou bien de ces tubes permet de réduire le nombre de premiers éléments d'accrochage solidaires du réservoir souple et par suite, le nombre de seconds éléments d'accrochage solidaires du compartiment. L'utilisation de ces gaines ou bien de ces tubes permet également de protéger le câble des agressions extérieures qu'il pourrait subir, notamment lors de sa mise en place dans le compartiment.

Cependant, la longueur de ces gaines et de ces tubes peut être limitée afin de conserver la souplesse du réservoir souple nécessaire d'une part à sa mise en place dans le compartiment et d'autre part à sa tenue aux chocs.

Les premiers moyens d'accrochage peuvent comporter simultanément des anneaux ou des boucles fermées et des gaines ou des tubes, les gaines ou des tubes étant par exemple situés dans les zones droites du réservoir souple et les anneaux ou bien les boucles fermées dans les zones courbes ainsi que dans les coins de ce réservoir souple.

Afin de permettre de fixer rapidement chaque câble sur le compartiment, les seconds éléments d'accrochage solidaires du compartiment sont des moyens d'accrochage rapide. En effet, le câble étant préassemblé sur le réservoir, il n'est pas possible de passer le câble en utilisant une de ses extrémités dans des anneaux ou bien des boucles fermées solidaires du compartiment. De fait, les moyens d'accrochage rapide sont formés par des boucles ouvertes permettant ainsi de mettre en place le câble dans ces seconds éléments d'accrochage. De plus, ces moyens d'accrochage rapide doivent également empêcher que le câble puisse sortir après mise en place du réservoir souple dans le compartiment, c'est-à-dire sans intervention manuelle d'un opérateur, afin de sécuriser cette fixation. Enfin, le démontage d'un réservoir, par exemple lors d'une opération de maintenance, est également facilité par la présence de ces moyens d'accrochage rapide qui permettent de désolidariser rapidement et facilement le câble du compartiment.

Ces moyens d'accrochage rapide sont par exemple en forme de spirale, permettant ainsi une mise en place rapide du câble, ce câble ne pouvant s'échapper de cette spirale sans intervention manuelle d'un opérateur.

Ces moyens d'accrochage rapide peuvent également être des boucles ouvertes munies d'un système de fermeture mobile. Le câble peut ainsi facilement être mis en place dans le moyen d'accrochage rapide en écartant le système de fermeture mobile, ce système de fermeture mobile empêchant ensuite le câble de s'échapper de ce moyen d'accrochage rapide. Un tel moyen d'accrochage rapide est par exemple un mousqueton constitué par une boucle ouverte et une lame métallique munie d'un système élastique de rappel.

Bien entendu, les premiers éléments d'accrochage solidaires du réservoir souple peuvent également être de tels moyens d'accrochage rapide. L'utilisation de ces moyens d'accrochage rapide permet de faciliter le montage du câble sur le réservoir souple. Cette utilisation permet en particulier que le câble soit assemblé sur le moyen de serrage préalablement au montage du câble sur ce réservoir souple. De même, l'utilisation de ces moyens d'accrochage rapide permet de faciliter le démontage du câble du réservoir souple.

Selon un second mode de réalisation de l'invention, chaque câble de ce dispositif de fixation ainsi que chaque moyen de serrage sont préalablement assemblés sur le compartiment. Le câble passe dans ce but dans des seconds éléments d'accrochage solidaires du compartiment. Chaque second élément d'accrochage peut être un moyen d'accrochage fermé, tel qu'un anneau ou bien une boucle fermée, une gaine ou bien un tube afin d'éviter que le câble puisse s'échapper de ce second élément d'accrochage. Ces seconds éléments d'accrochage solidaires du compartiment peuvent également être des moyens d'accrochage rapide, par exemple un moyen d'accrochage en forme de spirale ou bien un mousqueton.

Les premiers éléments d'accrochage solidaires du réservoir souple sont alors des moyens d'accrochage rapide pour ce second mode de réalisation de l'invention.

Chaque moyen de serrage est relié à au moins un câble et permet d'effectuer la mise en tension de chaque câble et de maintenir chaque câble en tension pendant l'utilisation du réservoir souple. De préférence, chaque moyen de serrage est relié à un seul câble, le dispositif de fixation selon l'invention comportant autant de moyens de serrage que de câbles.

De fait, cette mise en place d'un réservoir dans son compartiment est réalisée de façon plus efficace et plus rapide, les opérations manuelles étant réduites et, de plus, moins pénibles et fastidieuses.

Avantageusement, chaque moyen de serrage est de préférence réversible, c'est-à-dire qu'il permet également le desserrage du câble sans destruction de ce câble, permettant ainsi de réutiliser ce câble et ce moyen de serrage.

L'utilisation de moyens de serrage réversibles permet également de faciliter les opérations de maintenance. En effet, la remise en place du réservoir est facilitée et plus rapide, le câble restant intact et en place sur le réservoir souple ou le compartiment.

Chaque moyen de serrage peut par exemple effectuer ce serrage par enroulement du câble, le desserrage étant obtenu par déroulement de ce câble. Cet enroulement du câble peut être simple, c'est-à-dire effectué par une seule extrémité de ce câble, l'autre extrémité étant fixée à un point fixe de ce moyen de serrage ou bien à un élément d'accrochage. Cet enroulement du câble peut également être double, c'est-à-dire effectué simultanément par les deux extrémités de ce câble.

Avantageusement, cet enroulement double permet d'effectuer ce serrage du câble ainsi que son desserrage deux fois plus rapidement qu'un enroulement simple. De plus, cet enroulement double permet de mieux répartir la tension sur l'ensemble du câble. De même, les contraintes de frottement du câble au niveau de chaque moyen de serrage sont également mieux réparties.

Chaque moyen de serrage peut par exemple comporter une molette rotative et un axe d'enroulement solidaires en rotation. La molette rotative permet, en étant tournée par un opérateur d'enrouler le câble autour de l'axe d'enroulement, le desserrage du câble étant réalisé par déroulement du câble de l'axe d'enroulement. Ce moyen de serrage comporte également un système de verrouillage de cette molette rotative évitant le déroulement intempestif du câble et, par suite, la perte de tension du câble.

Le système de verrouillage peut être constitué par exemple d'une roue crantée solidaire de la molette et d'une butée fixe dans le moyen de serrage, cette butée fixe autorisant la rotation de la molette uniquement dans un premier sens, correspondant à l'enroulement du câble, et bloquant la rotation dans un second sens, correspondant au déroulement de ce câble, sans intervention extérieure. Un tel moyen de serrage peut réaliser un enroulement simple ou double du câble.

Le déroulement du câble peut être effectué par l'intermédiaire de la molette rotative, qui est tournée par l'opérateur dans le sens inverse de l'enroulement, après action sur le système de verrouillage libérant la rotation de la molette rotative.

Ce déroulement du câble peut également être obtenu en désolidarisant en rotation la molette rotative de l'axe d'enroulement, l'axe d'enroulement étant alors entraîné en rotation par le câble qui se détend. La molette rotative est par contre solidarisée en rotation à l'axe d'enroulement pour d'une part permettre d'enrouler le câble autour de l'axe d'enroulement assurant ainsi le serrage du câble et d'autre part maintenir ce câble en tension lors de l'utilisation du réservoir souple.

La molette rotative peut être désolidarisée en rotation de l'axe d'enroulement en coulissant par rapport à cet axe d'enroulement ou bien par l'intermédiaire d'une pièce de liaison coulissante.

Un tel moyen de serrage réversible est notamment utilisé pour le serrage de chaussures et est décrit plus précisément dans le document US5934599.

De préférence, le câble est un câble métallique de petite section afin de limiter le volume du moyen de serrage. En effet, le câble s'enroulant par exemple autour de l'axe d'enroulement, plus le diamètre du câble est important, plus le volume de l'enroulement de ce câble est important. De plus, l'utilisation d'un câble fin de petite section est favorable à une mise en tension efficace de ce câble notamment au niveau des coins du réservoir.

Par exemple, ce câble métallique a un diamètre compris entre 0.5 millimètre (0.5mm) et 1mm.

Cependant, ce câble peut être non métallique, ce câble étant par exemple un fil ou bien un cordon en nylon.

L'utilisation de ce dispositif de fixation selon l'invention permet avantageusement de faciliter les opérations de mise en place d'un réservoir souple dans un compartiment et les opérations de maintenance de ce réservoir souple. En effet, de telles opérations sont alors, grâce au dispositif de fixation selon l'invention, moins pénibles et moins fastidieuses à réaliser pour l'opérateur et de plus également plus rapides. En particulier la mise en tension du câble de ce dispositif de fixation est réalisée de façon plus efficace et répétitive. Enfin, ces opérations peuvent être intégrées plus efficacement dans un processus industriel, étant moins soumises aux aléas des opérations manuelles d'un opérateur.

En outre, ce dispositif de fixation ne modifie pas le comportement du réservoir souple lors d'un crash de l'aéronef, les premiers et seconds éléments d'accrochage pouvant s'ouvrir ou bien se désolidariser respectivement du réservoir ou bien du compartiment, alors que le câble et le moyen de serrage restent intègres.

L'invention a également pour objet un réservoir souple à carburant destiné en particulier à un aéronef à voilure tournante. Ce réservoir souple comporte un dispositif de fixation précédemment évoqué permettant de fixer et de mettre en forme ce réservoir souple dans un compartiment de l'aéronef.

Un autre objet de l'invention est un système de stockage de carburant destiné en particulier à un aéronef à voilure tournante. Ce système de stockage de carburant comportant au moins un réservoir souple, au moins un compartiment et un dispositif de fixation précédemment décrit pour chaque réservoir souple.

Chaque câble d'un dispositif de fixation de ce système de stockage de carburant peut ainsi être préassemblé sur le réservoir souple ou bien sur le compartiment.

En outre, un compartiment et un réservoir souple de ce système de stockage de carburant peuvent comporter une zone inférieure et une zone supérieure. Un premier câble du dispositif de fixation permet alors d'assurer la mise en tension du réservoir souple dans le compartiment sur la zone inférieure et un second câble permet d'assurer la mise en tension du réservoir souple dans le compartiment sur la zone supérieure.

Un autre objet de l'invention est un aéronef comportant un système de stockage de carburant précédemment décrit, et plus particulièrement un aéronef à voilure tournante.

Un tel aéronef à voilure tournante peut, par exemple, comporter une structure inférieure et un plancher recouvrant cette structure inférieure, au moins un compartiment du système de stockage de carburant étant situé dans cette structure inférieure.

Un compartiment de ce système de stockage de carburant peut également être situé dans une structure verticale de l'aéronef, telles que des cloisons transversales ou latérales.

L'invention et ses avantages apparaîtront avec plus de détails dans le cadre de la description qui suit avec des exemples de réalisation donnés à titre illustratif en référence aux figures annexées qui représentent :
- la figure 1, un aéronef à voilure tournante équipé d'un système de stockage de carburant,
- les figures 2 et 3, un système de stockage de carburant équipé de dispositifs de fixation de chaque réservoir,
- les figures 4 à 6, trois exemples d'un moyen d'accrochage fermé,
- les figures 7 et 8, deux exemples d'un moyen d'accrochage rapide, et
- la figure 9, une vue partielle d'un exemple de moyen de serrage.

Les éléments présents dans plusieurs figures distinctes sont affectés d'une seule et même référence.

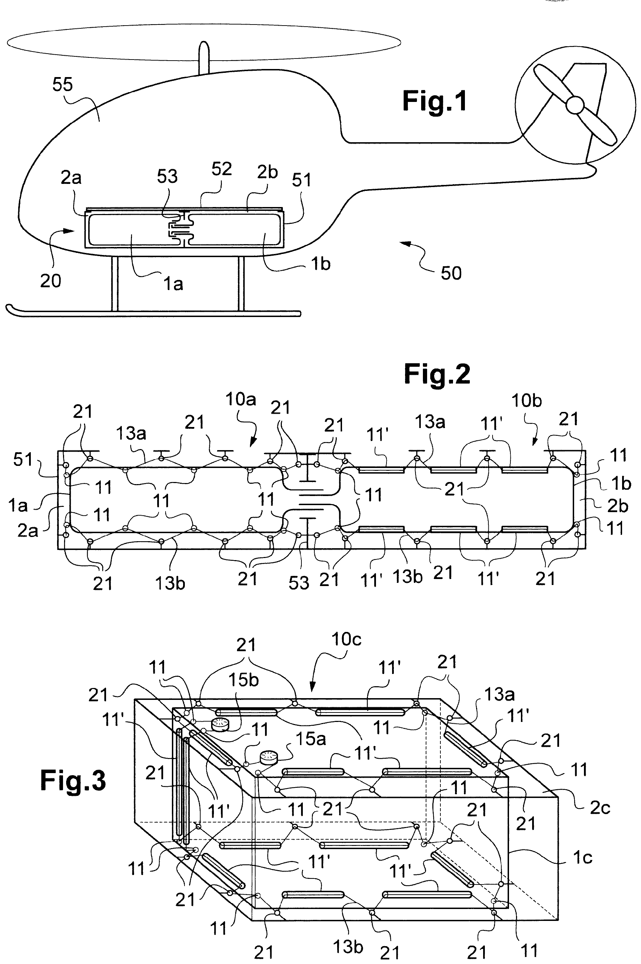

Sur la figure 1 est représenté un aéronef 50 comprenant une structure inférieure 51 en dessous d'une cabine 55, un plancher 52 recouvrant la structure inférieure 51 et un système de stockage de carburant 20 situé à l'intérieur la structure inférieure 51. Ce système de stockage de carburant 20 comporte deux compartiments 2a,2b séparés par une cloison structurelle 53 et deux réservoirs souples 1a,1b disposés respectivement dans un compartiment 2a,2b.

En outre, un système de stockage de carburant 20, comportant au moins un compartiment 2a,2b et au moins un réservoir souple 1a,1b, peut également être situé dans une ou plusieurs structures verticales de l'aéronef 50, telle que des cloisons transversales ou latérales.

La figure 2 représente le système de stockage de carburant 20 comportant deux réservoirs souples 1a,1b de forme sensiblement parallélépipédique et situés respectivement dans un compartiment 2a,2b. Chaque réservoir souple 1a,1b est fixé et mis en forme respectivement dans un compartiment 2a,2b par un dispositif de fixation 10a,10b.

Un tel dispositif de fixation 10c d'un réservoir souple 1c fixé dans un compartiment 2c est également représenté en perspective sur la figure 3.

Chaque dispositif de fixation 10a,10b,10c comporte deux câbles 13a,13b, des premiers éléments d'accrochage 11,11', des seconds éléments d'accrochage 12 et deux moyens de serrage 15a,15b. Ces deux moyens de serrage 15a,15b, visibles uniquement sur la figure 3, sont fixés au réservoir 1c, et plus particulièrement sur la face supérieure de ce réservoir 1c. Ces moyens de serrage 15a,15b sont ainsi plus accessibles pour un opérateur.

Chaque moyen de serrage 15a,15b permet ainsi d'assurer le serrage et la mise en tension d'un câble 13a,13b afin de mettre en forme le réservoir souple 1a,1b,1c et de le fixer dans le compartiment 2a,2b,2c. De plus, ces moyens de serrage 15a,15b sont réversibles et permettent également le desserrage des câbles 13a,13b pour permettre notamment le démontage du réservoir 1a,1b,1c.

Les câbles 13a,13b sont préassemblés sur le réservoir 1a,1b,1c, c'est-à-dire qu'ils ont été assemblés sur le réservoir 1a,1b,1c avant la mise en place de ce réservoir souple 1a,1b,1c dans le compartiment 2a,2b,2c. Le câble 13a,13b a ainsi été passé dans des premiers éléments d'accrochage 11,11' fixés sur le réservoir souple 10a,10b,10c.

Les premiers éléments d'accrochage 11,11' sont de préférence fixés sur les arêtes du réservoir souple 1a,1b,1c afin de permettre une mise en forme optimum du réservoir souple 1a,1b,1c dans le compartiment 2a,2b,2c.

Les premiers éléments d'accrochage 11,11' peuvent être des moyens d'accrochages fermés constitués par d'une part des anneaux 11 ou bien des boucles fermées 11 et d'autre part des gaines 11' ou des tubes 11'. Ces premiers éléments d'accrochage 11,11' sont fermés, c'est-à-dire qu'un opérateur a passé l'extrémité du câble 13a,13b dans ces premier éléments d'accrochage 11,11'. Avantageusement, ces premiers éléments d'accrochage 11,11' étant fermés, le câble 13a,13b ne peut pas s'échapper de ces premiers éléments d'accrochage 11,11' une fois que les deux extrémités de ce câble 13a,13b sont fixées par exemple au moyen de serrage 15a,15b.

L'utilisation de gaines 11' ou bien de tubes 11' permet de répartir la tension du câble 13a,13b linéairement sur le réservoir souple 1a,1b,1c contrairement à un anneau 11 ou une boucle fermée 11 qui applique cette tension ponctuellement sur le réservoir souple 1a,1b,1c. L'utilisation de ces gaines 11' ou bien de ces tubes 11' permet également de protéger le câble 13a,13b des agressions extérieures qu'il pourrait subir, notamment lors de sa mise en place dans le compartiment 2a,2b,2c.

Les premiers éléments d'accrochage 11,11' peuvent comporter simultanément des anneaux 11 ou des boucles fermées 11 et des gaines 11' ou des tubes 11', comme représenté sur la figure 3. Les gaines 11' ou des tubes 11' sont situés de préférence dans les zones droites du réservoir souple 1c et les anneaux 11 ou les boucles fermées 11 dans les coins de ce réservoir souple 1c et éventuellement dans des zones courbes de ce réservoir souple 1c.

Cependant, selon la figure 2, un réservoir 1a peut comporter uniquement des premiers éléments d'accrochage 11 constitués par des anneaux 11 ou des boucles fermées 11 alors qu'un réservoir 1b peut comporter uniquement des premiers éléments d'accrochage 11' constitués par des gaines 11' ou des tubes 11'.

Avantageusement, l'utilisation de ces gaines 11' ou bien de ces tubes 11' permet de réduire le nombre de premiers éléments d'accrochage 11,11' solidaires du réservoir souple 1a,1b et par suite, le nombre de seconds éléments d'accrochage solidaires 12 du compartiment 2a,2b.

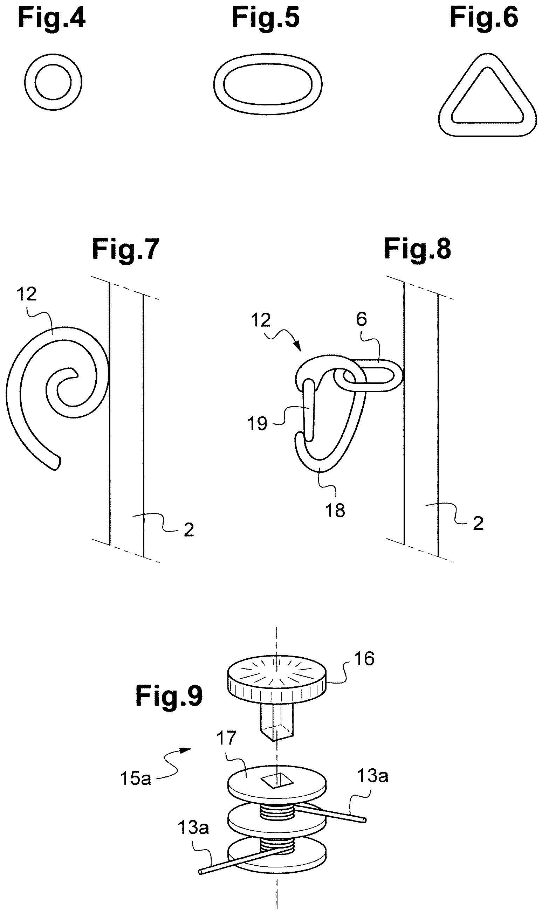

Un anneau 11 est représenté sur la figure 4 et deux exemples de boucles fermées 11, qui peuvent prendre différentes formes, sont représentés sur les figures 5 et 6.

Les seconds éléments d'accrochage 12 solidaires du compartiment 2a,2b,2c sont des moyens d'accrochage rapide formés par des boucles ouvertes. Ces moyens d'accrochage rapide permettent ainsi de mettre en place le câble 13a,13b rapidement dans ces seconds éléments d'accrochage 12, tout en empêchant que le câble 13a,13b puisse sortir de ces seconds éléments d'accrochage 12 après mise en place du réservoir souple 1a,1b,1c dans le compartiment 2a,2b,2c, c'est-à-dire sans intervention manuelle d'un opérateur, sécurisant ainsi cette fixation.

Ces moyens d'accrochage rapide facilitent également le démontage d'un réservoir souple 1a,1b,1c lors d'une opération de maintenance, permettant de désolidariser rapidement et facilement le câble 13a,13b du compartiment 2a,2b,2c.

Ces moyens d'accrochage rapide peuvent être des boucles ouvertes 12 par exemple en forme de spirale selon la figure 7. Le câble 13a,13b positionné au centre de cette boucle ouverte 12 en forme de spirale ne peut s'échapper de cette boucle ouverte 12 sans une intervention manuelle d'un opérateur.

Ces moyens d'accrochage rapide peuvent également être des boucles ouvertes 18 munies d'un système de fermeture mobile 19 tel qu'un mousqueton représenté sur la figure 8. Le câble 13a,13b peut ainsi facilement être mis en place dans le moyen d'accrochage rapide en écartant le système de fermeture mobile 19, ce système de fermeture mobile 19 empêchant ensuite le câble 13a,13b de s'échapper de ce moyen d'accrochage rapide.

Ces seconds éléments d'accrochage 12 peuvent être fixés directement au compartiment 2a,2b,2c selon la figure 7, par exemple par soudure. Ces seconds éléments d'accrochage 12 peuvent également être fixés au compartiment 2 par l'intermédiaire d'un anneau 6 selon la figure 8, cet anneau 6 étant par exemple fixé au compartiment 2 par soudure.

Les deux câbles 13a,13b sont situés respectivement sur une face inférieure et une face supérieure du réservoir souple 1a,1b,1c. Un premier câble 13b est positionné sur la face inférieure de ce réservoir souple 1a,1b,1c et est mis en tension par l'intermédiaire d'un premier moyen de serrage 15b alors qu'un second câble 13a est positionné sur la face supérieure de ce réservoir souple 1a,1b,1c et est mis en tension par l'intermédiaire d'un second moyen de serrage 15a.

Ce premier câble 13b permet de mettre en tension uniquement la face inférieure du réservoir souple 1a,1b,1c et, par suite, de supprimer les plis sur cette face inférieure lors de la mise en place du réservoir souple 1a,1b,1c dans le compartiment 2a,2b,2c.

Le second câble 13a permet de mettre en tension la face supérieure du réservoir souple 1a,1b,1c et, par suite, de terminer la mise en place et la mise en forme de ce réservoir souple 1a,1b,1c dans le compartiment 2a,2b,2c.

Les deux moyens de serrage 15a,15b sont situés sur la face supérieure de ce réservoir souple 1c afin d'être accessibles pour un opérateur. Le premier câble 13b chemine sur une face latérale du réservoir souple 1a,1b,1c afin d'atteindre la face supérieure et d'être relié au premier moyen de serrage 15b. Le premier câble 13b chemine dans deux gaines 11' sur cette face latérale afin d'être protégé d'éventuelles agressions extérieures.

En outre, un tel dispositif de fixation 10a,10b,10c peut comporter plus de deux câbles 13a,13b afin d'effectuer la mise en tension de plusieurs faces d'un réservoir souple de forme complexe et, par suite, sa mise en forme.

Un tel dispositif de fixation 10a,10b,10c peut également comporter un seul câble 13a,13b afin d'avoir un seul moyen de serrage 15a,15b et, par suite, une seule opération de serrage de ce câble 13a,13b. Ce câble 13a,13b peut être positionné sur une seule face du réservoir souple 1a,1b,1c assurant ainsi la mise en tension de cette seule face du réservoir 1a,1b,1c. Ce câble 13a,13b peut également être positionné sur plusieurs faces du réservoir souple 1a,1b,1c assurant ainsi la mise en tension simultanée de ces faces du réservoir et, par suite, une mise en place rapide du réservoir souple 1a,1b,1c dans le compartiment 2a,2b,2c.

Un exemple d'un moyen de serrage 15a permettant le serrage et le desserrage d'un câble 13a est représenté partiellement sur la figure 9. Ce moyen de serrage 15a est réversible et comporte notamment une molette rotative 16 et un axe d'enroulement 17. La molette rotative 16 permet d'entrainer en rotation l'axe d'enroulement 17 lorsqu'elle est tournée par un opérateur. Cet axe d'enroulement 17 permet alors l'enroulement simultané des deux extrémités du câble 13a.

Ce moyen de serrage 15a comporte également un système de verrouillage de cette molette rotative 16 évitant le déroulement intempestif du câble 13a et, par suite, la perte de tension du câble 13a, ce système de verrouillage n'étant pas représenté sur la figure 9.

Le déroulement du câble 13a peut être effectué par l'intermédiaire de la molette rotative 16, qui est tournée dans le sens inverse à l'enroulement par l'opérateur, après action sur le système de verrouillage libérant la rotation de la molette rotative 16.

Ce déroulement du câble 13a peut également être obtenu en désolidarisant la molette rotative 16 de l'axe d'enroulement 17 par translation de la molette rotative 16 par exemple. L'axe d'enroulement 17 est alors entraîné en rotation par le câble 13a qui se détend.

Le câble 13a,13b est de préférence un câble métallique de petite section afin de limiter son volume une fois enroulé sur l'axe d'enroulement 17. Par exemple, ce câble métallique a un diamètre compris entre 0.5mm et 1mm.

Naturellement, la présente invention est sujette à de nombreuses variations quant à sa mise en oeuvre. Par exemple, les premiers éléments d'accrochage 11 solidaires du réservoir souple 1a,1b,1c peuvent être des moyens d'accrochage rapide. L'utilisation de ces moyens d'accrochage rapide sur le réservoir souple 1a,1b,1c permet de faciliter le montage et le démontage des câbles 13a,13b,et permet en particulier que chaque câble 13a,13b soit assemblé sur le moyen de serrage 15a,15b respectif préalablement au montage du câble 13a,13b sur ce réservoir souple 1a,1b,1c.

De plus, les câbles 13a,13b peuvent être préassemblés sur le compartiment 2a,2b,2c au lieu du réservoir souple 1a,1b,1c. Dans ce cas, les moyens de serrage 15a,15b sont fixés sur le compartiment 2a,2b,2c. Les premiers éléments d'accrochage 11 solidaires du réservoir souple 1a,1b,1c sont alors des moyens d'accrochage rapide. Les seconds éléments d'accrochage 12 solidaires du compartiment 2a,2b,2c peuvent être des moyens d'accrochage fermés ou bien des moyens d'accrochage rapide.

Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif de fixation (10a,10b,10c) d'un réservoir souple (1a,1b,1c) dans un compartiment (2a,2b,2c), ledit dispositif de fixation (10a,10b,10c) comportant :
- une pluralité de premiers éléments d'accrochage (11,11') aptes à être solidaires dudit réservoir souple (1a,1b,1c),
- une pluralité de seconds éléments d'accrochage (12) aptes à être solidaires dudit compartiment (2a,2b,2c) et,
- au moins un câble (13a,13b), chaque câble (13a,13b) passant dans au moins une partie desdits premiers éléments d'accrochage (11,11') et au moins une partie desdits seconds éléments d'accrochage (12) pour assurer la mise en forme et la fixation dudit réservoir souple (1a,1b,1c) dans ledit compartiment (2a,2b,2c),
- au moins un moyen de serrage (15a,15b) de chaque câble (13a,13b),
**caractérisé en ce que** chaque moyen de serrage (15) comportant une molette rotative (16), un axe d'enroulement (17) et un système de verrouillage de ladite molette rotative (16), ladite molette rotative (16) permettant d'enrouler ledit câble (13a,13b) autour dudit axe d'enroulement (17), ledit système de verrouillage évitant le déroulement intempestif dudit câble (13a,13b).

2. Dispositif de fixation (10a,10b,10c) selon la revendication 1,
**caractérisé en ce que** ledit dispositif de fixation (10a,10b,10c) comporte deux câbles (13a,13b) distincts et deux moyens de serrage (15a,15b) distincts, chaque moyen de serrage (15a,15b) étant relié à un seul câble (13a,13b) afin d'assurer le serrage dudit câble (13a,13b).

3. Dispositif de fixation (10a,10b,10c) selon l'une quelconque des revendications 1 à 2,
**caractérisé en ce que** ledit moyen de serrage (15a,15b) est réversible, permettant le desserrage dudit câble (13a,13b), ledit desserrage dudit câble (13a,13b) étant réalisé par déroulement dudit câble (13a,13b) dudit axe d'enroulement (17).

4. Dispositif de fixation (10a,10b,10c) selon l'une quelconque des revendications 1 à 3,
**caractérisé en ce que** ladite molette rotative (16) peut être solidarisée et désolidarisée en rotation dudit axe d'enroulement (17), ladite molette rotative (16) permettant le serrage d'un câble (13a,13b) par enroulement dudit câble (13a,13b) autour dudit axe d'enroulement (17) lorsque ladite molette rotative (16) est solidaire en rotation avec ledit axe d'enroulement (17), le desserrage dudit câble (13a,13b) étant réalisé par désolidarisation de ladite molette rotative (16) dudit axe d'enroulement (17) et par déroulement dudit câble (13a,13b) dudit axe d'enroulement (17).

5. Dispositif de fixation (10a,10b,10c) selon l'une quelconque des revendications 1 à 4,
**caractérisé en ce que** chaque premier élément d'accrochage (11,11') est un moyen d'accrochage rapide.

6. Dispositif de fixation (10a,10b,10c) selon la revendication 5,
**caractérisé en ce qu'**au moins un second élément d'accrochage (12) est un moyen d'accrochage fermé.

7. Dispositif de fixation (10a,10b,10c) selon l'une quelconque des revendications 1 à 6,
**caractérisé en ce que** chaque second élément d'accrochage (12) est un système d'accrochage rapide.

8. Dispositif de fixation (10a,10b,10c) selon la revendication 7,
**caractérisé en ce qu'**au moins un premier élément d'accrochage (11,11') est un moyen d'accrochage fermé.

9. Réservoir souple (1a,1b,1c),
**caractérisé en ce que** ledit réservoir souple (1a,1b,1c) comporte un dispositif de fixation (10a,10b,10c) selon l'une quelconque des revendications 1 à 8, ledit dispositif de fixation (10a,10b,10c) permettant de fixer et de mettre en forme ledit réservoir souple (1a,1b,1c) dans un compartiment (2a,2b,2c).

10. Réservoir souple (1a,1b,1c) selon la revendication 9,
**caractérisé en ce que** lesdits premiers éléments d'accrochage (11,11') sont fixés sur des arêtes dudit réservoir souple (1a,1b,1c).

11. Système de stockage de carburant (20) comportant au moins un réservoir souple (1a,1b,1c) et au moins un compartiment (2a,2b,2c),
**caractérisé en ce que** ledit système de stockage de carburant (20) comporte au moins un dispositif de fixation (10a,10b,10c) selon l'une quelconque des revendications 1 à 8, chaque dispositif de fixation (10a,10b,10c) permettant de fixer et de mettre en forme un réservoir souple (1a,1b,1c) dans un compartiment (2a,2b,2c).

12. Système de stockage de carburant (20) selon la revendication 11,
**caractérisé en ce que**, au moins un compartiment (2a,2b,2c) et au moins un réservoir souple (1a,1b,1c) comportant une zone inférieure et une zone supérieure, ledit dispositif de fixation (10a,10b,10c) comporte deux câbles (13a,13b), un premier câble (13b) permettant la mise en tension dudit réservoir souple (1a,1b,1c) dans ledit compartiment (2a,2b,2c) sur ladite zone inférieure et un second câble (13a) permettant la mise en tension dudit réservoir souple (1a,1b,1c) dans ledit compartiment (2a,2b,2c) sur ladite zone supérieure.

13. Système de stockage de carburant (20) selon l'une quelconque des revendications 11 à 12,
**caractérisé en ce qu'**au moins un câble (13a,13b) est préassemblé sur ledit réservoir souple (1a,1b,1c).

14. Système de stockage de carburant (20) selon l'une quelconque des revendications 11 à 13,
**caractérisé en ce qu'**au moins un câble (13a,13b) est préassemblé sur ledit compartiment (2a,2b,2c).

15. Aéronef (50),
**caractérisé en ce que** ledit aéronef (50) comporte un système de stockage de carburant (20) selon l'une quelconque des revendications 11 à 14.

16. Aéronef (50) selon la revendication 15,
**caractérisé en ce que** ledit aéronef (50) comporte une structure inférieure (51) et un plancher (52) recouvrant ladite structure inférieure (51), au moins un compartiment (2a,2b,2c) étant situé dans ladite structure inférieure (51).

## Patentansprüche

1. Vorrichtung zum Befestigen (10a, 10b, 10c) eines flexiblen Behälters (1a, 1b, 1c) in einem Fach (2a, 2b, 2c), wobei die Befestigungsvorrichtung (10a, 10b, 10c) umfasst:
- eine Mehrzahl von ersten Aufhängungselementen (11, 11'), die eingerichtet sind, mit dem flexiblen Tank (1a, 1b, 1c) verbunden zu werden,
- eine Mehrzahl von zweiten Aufhängungselementen (12), die eingerichtet sind, um mit dem Fach (2a, 2b, 2c) integral zu sein, und
- mindestens ein Kabel (13a, 13b), wobei jedes Kabel (13a, 13b) durch mindestens einen Teil der ersten Aufhängungselemente (11, 11') und mindestens einen Teil der zweiten Aufhängungselemente (12) verläuft, um die Formgebung und Befestigung des flexiblen Behälters (1a, 1b, 1c) in dem Fach (2a, 2b, 2c) sicherzustellen,
- mindestens ein Spannmittel (15a, 15b) für jedes Kabel (13a, 13b),
**dadurch gekennzeichnet, dass** jedes Spannmittel (15) ein Drehrad (16), eine Wickelachse (17) und ein Verriegelungssystem für das Drehrad (16) umfasst, wobei das Drehrad (16) es ermöglicht, das Kabel (13a, 13b) um die Wickelachse (17) zu wickeln, und wobei das Verriegelungssystem ein unzeitiges Abwickeln des Kabels (133, 13b) verhindert.

2. Befestigungsvorrichtung (10a, 10b, 10c) nach Anspruch 1,
**dadurch gekennzeichnet, dass** die Befestigungsvorrichtung (10a, 10b, 10c) zwei getrennte Kabel (13a, 13b) und zwei getrennte Spannmittel (15a, 15b) umfasst, wobei jedes Spannmittel (15a, 15b) mit einem einzigen Kabel (13a, 13b) verbunden ist, um die Spannung des Kabels (13a, 13b) sicherzustellen.

3. Befestigungsvorrichtung (10a, 10b, 10c) nach einem der Ansprüche 1 bis 2, **dadurch gekennzeichnet, dass** das Spannmittel (15a, 15b) reversibel ist, um das Entspannen des Kabels (13a, 13b) zu ermöglichen, wobei das Entspannen des Kabels (13a, 13b) durch Abwickeln des Kabels (13a, 13b) von der Wickelachse (17) bewirkt wird.

4. Befestigungsvorrichtung (10a, 10b, 10c) nach einem der Ansprüche 1 bis 3,
**dadurch gekennzeichnet, dass** das Drehrad (16) in Rotation mit der Wickelachse (17) verbindbar und von ihr trennbar ist, wobei das Drehrad (16) das Spannen eines Kabels (13a, 13b) durch Wickeln des Kabels (13a, 13b) um die Wickelachse (17) ermöglicht, wenn das Drehrad (16) drehfest mit der Wickelachse (17) verbunden ist, wobei das Entspannen des Kabels (133, 13b) durch Lösen des Drehrades (16) von der Wickelachse (17) und durch Abwickeln des Kabels (13a, 13b) von der Wickelachse (17) durchgeführt wird.

5. Befestigungsvorrichtung (10a, 10b, 10c) nach einem der Ansprüche 1 bis 4,
**dadurch gekennzeichnet, dass** jedes erste Aufhängungselement (11, 11') ein Schnellaufhängungsmittel ist.

6. Befestigungsvorrichtung (10a, 10b, 10c) nach Anspruch 5,
**dadurch gekennzeichnet, dass** mindestens ein zweites Aufhängungselement (12) ein geschlossenes Aufhängungsmittel ist.

7. Befestigungsvorrichtung (10a, 10b, 10c) nach einem der Ansprüche 1 bis 6, **dadurch gekennzeichnet, dass** jedes zweite Aufhängungselement (12) ein Schnellaufhängungsmittel ist.

8. Befestigungsvorrichtung (10a, 10b, 10c) nach Anspruch 7,
**dadurch gekennzeichnet, dass** mindestens ein erstes Aufhängungselement (11, 11') ein geschlossenes Aufhängungsmittel ist.

9. Flexibler Behälter (1a, 1b, 1c), **dadurch gekennzeichnet, dass** der flexible Behälter (1a, 1b, 1c) eine Befestigungsvorrichtung (10a, 10b, 10c) nach einem der Ansprüche 1 bis 8 beinhaltet, wobei die Befestigungsvorrichtung (10a, 10b, 10c) es ermöglicht, den flexiblen Behälter (1a, 1b, 1c) in einem Fach (2a, 2b, 20) zu befestigen und zu formen.

10. Flexibler Behälter (1a, 1b, 1c) nach Anspruch 9, **dadurch gekennzeichnet, dass** die ersten Aufhängungselemente (11, 11') an Kanten des flexiblen Behälters (1a, 1b, 1c) befestigt sind.

11. Kraftstoffspeichersystem (20) mit mindestens einem flexiblen Behälter (1a, 1b, 1c) und mindestens einem Fach (2a, 2b, 2c), **dadurch gekennzeichnet, dass** das Kraftstoffspeichersystem (20) mindestens eine Befestigungsvorrichtung (10a, 10b, 10c) nach einem der Ansprüche 1 bis 8 umfasst, wobei jede Befestigungsvorrichtung (10a, 10b, 10c) es ermöglicht, einen flexiblen Behälter (1a, 1b, 1c) in einem Fach (2a, 2b, 20) zu befestigen und zu formen.

12. Kraftstoffspeichersystem (20) nach Anspruch 11, **dadurch gekennzeichnet, dass** mindestens ein Fach (2a, 20, 2c) und mindestens ein flexibler Behälter (1a, 1b, 1c) eine untere und eine obere Zone aufweisen und die Befestigungsvorrichtung (10a, 10b, 10c) zwei Kabel (13a, 13b) aufweist, ein erstes Kabel (13b) zum Spannen des flexiblen Behälters (1a, 1b, 1c) in dem Fach (2a, 2b, 2c) auf dem unteren Bereich und ein zweites Kabel (13a) zum Spannen des flexiblen Tanks (1a, 1b, 1c) in dem Fach (2a, 2b, 2c) auf dem oberen Bereich.

13. Kraftstoffspeichersystem (20) nach einem der Ansprüche 11 bis 12, **dadurch gekennzeichnet, dass** mindestens ein Kabel (13a, 13b) auf dem flexiblen Behälter vormontiert ist.

14. Kraftstoffspeichersystem (20) nach einem der Ansprüche 11 bis 13, **dadurch gekennzeichnet, dass** mindestens ein Kabel (13a, 13b) an dem Fach (2a, 2b, 2c) vormontiert ist.

15. Luftfahrzeug (50), **dadurch gekennzeichnet, dass** das Luftfahrzeug (50) ein Kraftstoffspeichersystem (20) nach einem der Ansprüche 11 bis 14 aufweist.

16. Luftfahrzeug (50) nach Anspruch 15, **dadurch gekennzeichnet, dass** das Luftfahrzeug (50) einen Unterbau (51) und einen Boden (52) aufweist, der den Unterbau (51) überdeckt, wobei wenigstens ein Fach (2a, 2b, 2c) in dem Unterbau (51) angeordnet ist.

## Claims

1. Device for fixing (10a, 10b, 10c) a flexible reservoir (1a, 1b, 1c) into a compartment (2a, 2b, 2c), said fixing device (10a, 10b, 10c) comprising:
- a plurality of first fastening elements (11, 11') capable of being secured to said flexible reservoir (1a, 1b, 1c),
- a plurality of second fastening elements (12) capable of being secured to said compartment (2a, 2b, 2c) and,
- at least one cable (13a, 13b), each cable (13a, 13b) passing into at least one part of said first fastening elements (11, 11') and at least one part of said second fastening elements (12) to ensure the shaping and the fixing of said flexible reservoir (1a, 1b, 1c) in said compartment (2a, 2b, 2c),
- at least one means for clamping (15a, 15b) each cable (13a, 13b),
**characterised in that** each clamping means (15) comprises a rotating wheel (16), a winding axis (17) and a system for locking said rotating wheel (16), said rotating wheel (16) making it possible to wind said cable (13a, 13b) around said winding axis (17), said locking system avoiding the unintentional winding of said cable (13a, 13b).

2. Fixing device (10a, 10b, 10c) according to Claim 1, **characterised in that** said fixing device (10a, 10b, 10c) comprises two separate cables (13a, 13b) and two separate clamping means (15a, 15b), each clamping means (15a, 15b) being connected to one single cable (13a, 13b) in order to ensure the clamping of said cable (13a, 13b).

3. Fixing device (10a, 10b, 10c) according to any one of Claims 1 to 2, **characterised in that** said clamping means (15a, 15b) is reversible, making it possible for the unclamping of said cable (13a, 13b), said unclamping of said cable (13a, 13b) being achieved by unwinding said cable (13a, 13b) from said winding axis (17).

4. Fixing device (10a, 10b, 10c) according to any one of Claims 1 to 3, **characterised in that** said rotating wheel (16) can be secured and disconnected in rotation from said winding axis (17), said rotating wheel (16) making it possible for the clamping of a cable (13a, 13b) by winding said cable (13a, 13b) around said winding axis (17) when said rotating wheel (16) is secured in rotation with said winding axis (17), the unclamping of said cable (13a, 13b) being achieved by disconnecting said rotating wheel (16) from said winding axis (17) and by unwinding said cable (13a, 13b) from said winding axis (17).

5. Fixing device (10a, 10b, 10c) according to any one of Claims 1 to 4, **characterised in that** each first fastening element (11, 11') is a rapid fastening means.

6. Fixing device (10a, 10b, 10c) according to Claim 5, **characterised in that** at least one second fastening element (12) is a closed fastening means.

7. Fixing device (10a, 10b, 10c) according to any one of Claims 1 to 6, **characterised in that** each second fastening element (12) is a rapid fastening system.

8. Fixing device (10a, 10b, 10c) according to Claim 7, **characterised in that** at least one first fastening element (11, 11') is a closed fastening means.

9. Flexible reservoir (1a, 1b, 1c), **characterised in that** said flexible reservoir (1a, 1b, 1c) comprises a fixing device (10a, 10b, 10c) according to any one of Claims 1 to 8, said fixing device (10a, 10b, 10c) making it possible to fix and to shape said flexible reservoir (1a, 1b, 1c) in a compartment (2a, 2b, 2c).

10. Flexible reservoir (1a, 1b, 1c) according to Claim 9, **characterised in that** said first fastening elements (11, 11') are fixed onto the edges of said flexible reservoir (1a, 1b, 1c).

11. Fuel storage system (20) comprising at least one flexible reservoir (1a, 1b, 1c) and at least one compartment (2a, 2b, 2c), **characterised in that** said fuel storage system (20) comprises at least one fixing device (10a, 10b, 10c) according to any one of Claims 1 to 8, each fixing device (10a, 10b, 10c) making it possible to fix and to shape a flexible reservoir (1a, 1b, 1c) in a compartment (2a, 2b, 2c).

12. Fuel storage system (20) according to Claim 11, **characterised in that**, at least one compartment (2a, 2b, 2c) and at least one flexible reservoir (1a, 1b, 1c) comprising a lower zone and an upper zone, said fixing device (10a, 10b, 10c) comprises two cables (13a, 13b), a first cable (13b) making it possible to tension said flexible reservoir (1a, 1b, 1c) in said compartment (2a, 2b, 2c) on said lower zone and a second cable (13a) making it possible to tension said flexible reservoir (1a, 1b, 1c) in said compartment (2a, 2b, 2c) on said upper zone.

13. Fuel storage system (20) according to any one of Claims 11 to 12, **characterised in that** at least one cable (13a, 13b) is preassembled on said flexible reservoir (1a, 1b, 1c).

14. Fuel storage system (20) according to any one of Claims 11 to 13, **characterised in that** at least one cable (13a, 13b) is preassembled on said compartment (2a, 2b, 2c).

15. Aircraft (50), **characterised in that** said aircraft (50) comprises a fuel storage system (20) according to any one of Claims 11 to 14.

16. Aircraft (50) according to Claim 15, **characterised in that** said aircraft (50) comprises a lower structure (51) and a floor (52) covering said lower structure (51), at least one compartment (2a, 2b, 2c) being situated in said lower structure (51).
